# FASCICULE DE BREVET EUROPEEN

(11) **EP 1 741 938 B1**
(45) Date de publication et mention de la délivrance du brevet: **01.10.2008**
(21) Numéro de dépôt: 06291112.8
(22) Date de dépôt: 05.07.2006
(51) Int. Cl.: F16B 37/04

(54) **Agencement de cage pour un écrou cage**
Käfiganordnung für eine Käfigmutter
Cage assembly for a cage nut

(30) Priorité: 06.07.2005 FR 0507195
(43) Date de publication de la demande: 10.01.2007
(73) Titulaire: Lisi Automotive Rapid, 95650 Puiseux Pontoise (FR)
(72) Inventeur: Marcel, Gilles Jean Michel, 95620 Parmain (FR); Flores, Virgilio, 95430 Butry sur Oise (FR); Dacosta, Serge, 95400 Villiers Le Bel (FR)
(74) Mandataire: Delaveau, Sophie

(56) Documents cités:
- FR-A- 1 091 611
- US-A- 3 114 404

## Description

L'invention concerne un agencement de cage pour un écrou cage, ainsi qu'un écrou cage comportant un tel agencement. Un tel agencement et un tel écrou cage sont connus de FR 1.091.611.

On utilise depuis longtemps des écrous cage, également appelés, dans d'autres textes que le présent, écrous encagés. Les écrous cage comprennent, de manière générale, un écrou proprement dit monté dans une cage comportant un fond et deux pattes opposées qui s'étendent depuis ledit fond pour permettre la retenue de la cage dans un orifice pratiqué dans un panneau ou dans une paroi d'une pièce, panneau et paroi étant englobés par la suite par le terme paroi, afin que l'écrou soit maintenu, sur l'une des deux faces opposées de la paroi, devant l'ouverture et cela de manière qu'un accès à l'écrou à partir de l'autre des deux faces opposées soit assuré.

Généralement, les dimensions de la cage sont choisies de manière que l'écrou puisse être empêché d'être entraîné en rotation lors de l'engagement d'une vis ou d'une tige filetée dans cet écrou. En même temps, la cage est généralement dimensionnée de manière à donner à l'écrou une certaine liberté de mouvement transversal, dans quelque direction que ce soit par rapport à l'axe de rotation de l'écrou.

Cette tolérance plus ou moins grande selon les dimensions de l'écrou et de son taraudage ont pour conséquence qu'un monteur essayant d'engager une vis ou une tige filetée dans l'écrou n'y arrive pas toujours facilement parce que l'écrou ne se trouve souvent pas dans une position concentrique par rapport à l'ouverture devant laquelle l'écrou est maintenu.

Indépendamment de la perte de temps que représentent des essais infructueux d'engagement d'une tige ou d'une vis dans l'écrou et indépendamment du risque d'une nervosité croissante de la part du monteur à partir d'un certain nombres d'essais infructueux, la position aléatoire de l'écrou peut entraîner aussi un engagement désaxé de la vis ou de la tige dans l'écrou avec détérioration du taraudage de l'écrou ou du filetage de la vis ou de la tige, voire la détérioration des deux. Cet effet désastreux est amplifié lorsque la vis ou la tige est engagée par un outil de puissance tel une visseuse pneumatique.

Le but de l'invention est de remédier aux inconvénients indiqués ci avant.

Le but de l'invention est atteint avec un agencement de cage pour un écrou cage, agencement qui comprend une cage de fixation conformée pour enfermer un écrou et pour maintenir cet écrou, sur l'une de deux faces opposées d'une paroi, devant une ouverture pratiquée dans cette paroi et permettant simultanément un accès à l'écrou à partir de l'autre des deux faces de la paroi. La cage de fixation comprend à cet effet des moyens de fixation conformés pour saisir le pourtour de l'ouverture sur les deux faces opposées de la paroi.

Conformément à l'invention, l'agencement de cage comprend en outre une cage de rattrapage disposée à l'intérieur de la cage de fixation. La cage de rattrapage comporte des moyens élastiques conformés pour maintenir l'écrou non sollicité dans une position centrée devant l'ouverture de la paroi et pour permettre un déplacement de rattrapage, transversal à un axe de rotation de l'écrou, lorsque l'écrou est sollicité par l'engagement d'une vis dans cet écrou.

Le principe d'une cage double retenant un écrou à la place de l'agencement d'une cage unique traditionnelle conserve la facilité de mise en place des écrous cage et y ajoute un moyen permettant un centrage automatique de l'écrou à l'intérieur de la cage par laquelle l'écrou est fixé sur une paroi.

L'agencement de cage suivant l'invention peut également avoir l'une au moins des caractéristiques ci-après, considérée isolément ou selon toute combinaison techniquement possible :
- la cage de rattrapage est réalisée en un métal souple ;
- la cage de rattrapage est réalisée en un métal élastiquement déformable ;
- la cage de fixation est réalisée en un métal plus rigide que celui de la cage de rattrapage ;
- la cage de rattrapage comporte un pan perforé porteur de l'écrou et quatre pattes élastiquement déformables qui enferment chacune entre elle et le pan perforé un angle supérieur à 90° et qui sont disposées équidistantes les unes par rapport aux autres ;
- la cage de rattrapage est une pièce monolithique ayant la forme générale d'un tronc de pyramide obtenu par poinçonnage et pliage d'une feuille d'un métal souple ou élastiquement déformable, les quatre pattes constituant des pans latéraux du tronc de pyramide ;
- chacune des quatre pattes de la cage de rattrapage comporte un rebord obtenu par pliage vers l'intérieur de son extrémité libre, chacun des quatre rebords étant distancé du pan perforé suivant l'épaisseur de l'écrou afin de pouvoir immobiliser l'écrou axialement ;
- chacune des quatre pattes de la cage de rattrapage comporte, dans une partie formant un des pans latéraux du tronc de pyramide, une languette obtenue par poinçonnage et destinée à être en appui sur l'écrou lorsque celui-ci est situé à l'intérieur de la cage de rattrapage, les quatre languettes étant destinées à immobiliser l'écrou ainsi transversalement par rapport au pan perforé.

Habituellement, les écrous cage comportent des cages métalliques. Pour cette raison, la présente description cite en premier la réalisation des deux cages de l'agencement selon l'invention en des métaux plus ou moins souples, mais ayant des coefficients d'élasticité différents l'un de l'autre. Toutefois, il est aisé de concevoir que l'une au moins des deux cages puisse être réalisée en une matière synthétique plus ou moins rigide ou, au contraire, plus ou moins élastique.

Le choix du matériau, notamment le choix entre métal et matière synthétique, dépendant principalement du niveau de température auquel les écrous cage doivent résister, il n'en reste pas moins que le matériau choisi pour la cage de fixation doit être relativement plus rigide que le matériau choisi pour la cage de rattrapage.

Le but de l'invention est également atteint avec un écrou cage conformé pour être fixé sur l'une de deux faces opposées d'une paroi devant une ouverture pratiquée dans cette paroi et permettant un accès à l'écrou à partir de l'autre des deux faces de la paroi, l'écrou cage comprenant à cet effet des moyens de fixation conformés pour saisir le pourtour de l'ouverture sur les deux faces opposées de la paroi. L'écrou cage de l'invention comprend un agencement de cage tel que décrit ci-dessus.

Le plus souvent, l'écrou proprement dit d'un écrou cage est réalisé sous la forme d'une pièce au moins approximativement parallélépipédique dans laquelle on aménage un trou qui, ensuite, reçoit un taraudage. Dans ce cas, la cage de fixation traditionnelle tout comme la cage de fixation de l'agencement selon l'invention et la cage de rattrapage ont une forme générale parallélépipédique. Toutefois, il est également concevable que l'écrou proprement dit comporte six pans ou qu'il ait tout autre forme appropriée pour une utilisation distincte et que la cage traditionnelle ou que chacune des cages de l'agencement suivant l'invention ait une forme différente, appropriée pour ou adaptée à l'utilisation spécifique de l'écrou cage.

Pour simplifier la description, l'invention est décrite ci-après en référence à un écrou cage dont l'écrou proprement dit a une forme au moins approximativement parallélépipédique.

D'autres caractéristiques et avantages de la présente invention ressortiront de la description ci-après d'un mode de réalisation de l'invention, la description étant faite en référence aux dessins. Dans les dessins :
- les figures 1 et 2 montrent un écrou cage et un panneau récepteur de l'écrou avec un agencement de cage selon l'invention,
- la figure 3 montre l'écrou cage avec une partie d'un agencement de cage selon l'invention,
- la figure 4 montre un écrou cage avec un agencement de cage selon l'invention,
- la figure 5 montre un écrou cage avec un agencement de cage selon l'invention juste avant l'insertion de l'écrou cage dans une paroi, et
- la figure 6 montre l'écrou cage avec un agencement de cage selon l'invention inséré dans un panneau.

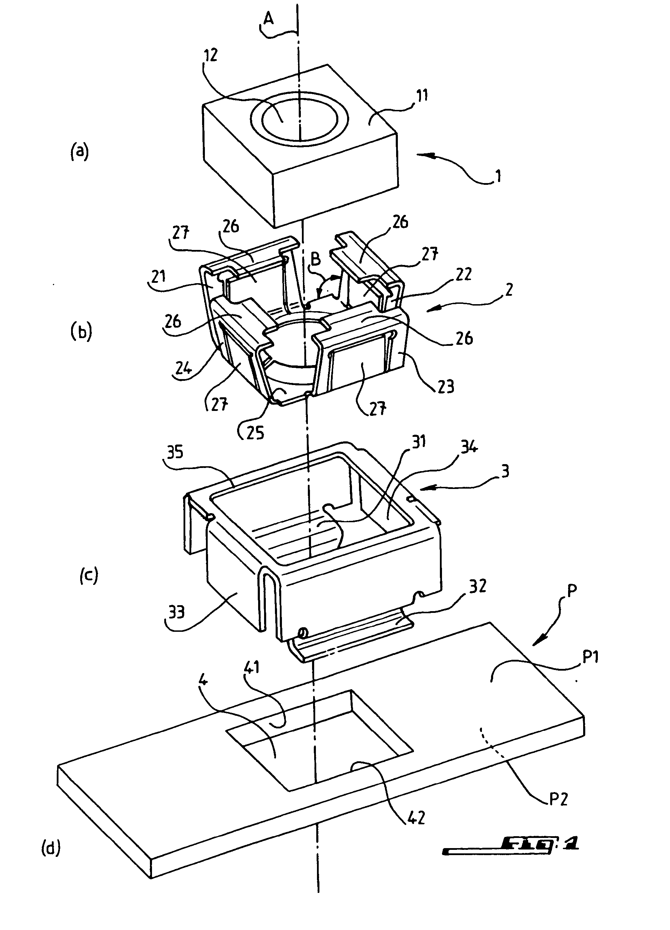

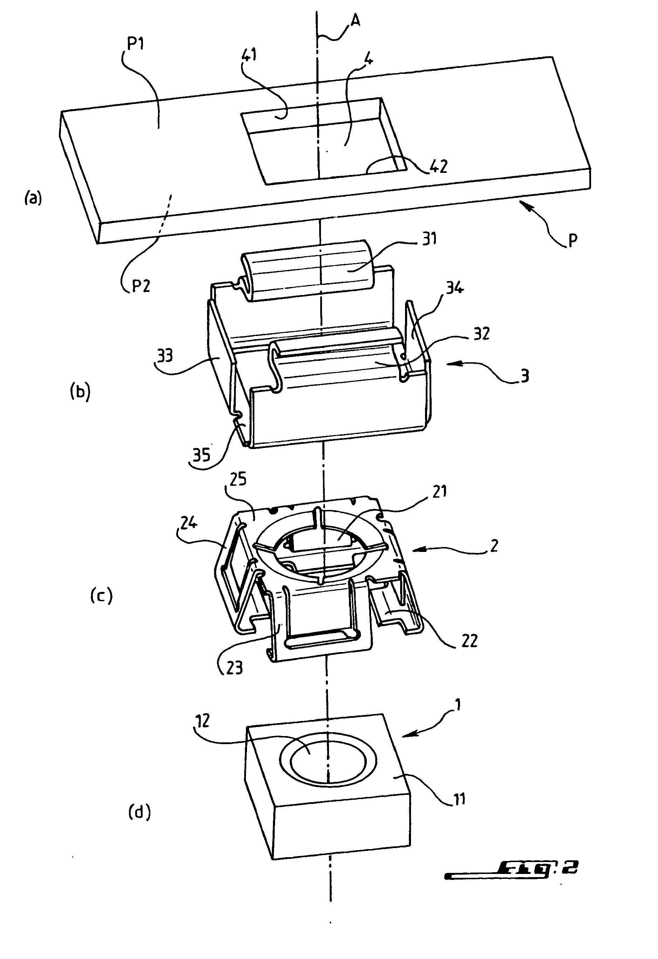

Les figures 1 et 2 montrent les éléments formant un écrou cage E avec un agencement de cage selon l'invention en une vue éclatée, les éléments étant disposés pour une insertion respectivement par le haut (figure 1) et par le bas (figure 2) de l'écrou cage dans une ouverture 4 d'une paroi P. On reconnaît sur ces figures un écrou 1 proprement dit sous la forme d'un écrou à quatre pans avec un corps 11 et un trou taraudé 12 dont le taraudage n'est pas représenté pour ne pas surcharger le dessin.

Les figures 1 et 2 montrent également un axe de symétrie A correspondant à l'axe du trou 12 de l'écrou 1. Cet axe A correspond à l'axe d'alignement des éléments de l'écrou cage par rapport à l'axe de symétrie de l'ouverture 4 de la paroi P.

Les figures 1 et 2 montrent ainsi, outre l'écrou 1 proprement dit et la paroi P avec l'ouverture 4 destinés à recevoir l'écrou cage E, ce qui constitue l'agencement de cage selon l'invention. Cet agencement comprend d'une part la cage de fixation 3 conformée de manière traditionnelle pour enfermer un écrou 1 à la manière des écrous cage utilisés avant l'invention. La cage de fixation 3 est conformée pour maintenir l'écrou 1, sur l'une ou l'autre des deux faces opposées P1, P2 de la paroi P, devant l'ouverture 4 pratiquée dans cette paroi P et pour permettre en même temps un accès à l'écrou 1 à partir de l'autre des deux faces P1, P2 de la paroi P. Suivant la représentation sur les figures 1 et 2, l'écrou cage E et donc la cage de fixation 3 sont disposés de manière à introduire l'écrou cage E dans l'ouverture 4 de la paroi P à partir de la face P1 et de permettre l'accès à l'écrou 1 à partir de la face P2.

La cage de fixation 3 comprend des moyens de fixation 31, 32 sous la forme de deux pattes flexibles conformées pour saisir deux bords opposés 41, 42 du pourtour de l'ouverture 4 sur les deux faces opposées P1, P2 de la paroi P. A cette structure essentiellement traditionnelle, l'invention a ajouté une cage de rattrapage 2 destinée à être disposée à l'intérieur de la cage de fixation 3. La cage de rattrapage 2 comporte des moyens élastiques 21 à 24 conformés pour maintenir l'écrou 1, lorsqu'il n'est pas sollicité, dans une position centrée devant l'ouverture 4 de la paroi P. Selon le mode de réalisation représenté sur les figures 1 et 2, ces moyens élastiques 21 à 24 consistent en des pattes élastiques. Les pattes 21 à 24 ont un degré d'élasticité déterminé de manière à permettre, outre le centrage automatique de l'écrou 1 non sollicité, un déplacement de rattrapage, transversal à l'axe de rotation A de l'écrou 1, lorsque l'écrou 1 est sollicité par l'engagement d'une vis dans cet écrou 1. C'est d'ailleurs pour cette raison qu'il a été préféré d'appeler cette cage 2 une cage de rattrapage au lieu de l'appeler cage de centrage. En effet, une fois la vis engagée, l'écrou 1 peut, par l'intermédiaire de la cage de rattrapage 2, rattraper un défaut d'alignement jusqu'à environ ± 2 mm dans quelque sens transversal par rapport à l'axe A que ce soit.

Avantageusement, la cage de rattrapage 2 est réalisée en un métal souple, et plus particulièrement en un métal élastiquement déformable. La cage de fixation 3 est alors réalisée en un métal plus rigide que celui de la cage de rattrapage 2.

Toutefois, sans sortir du principe de la présente invention, il est également concevable que la cage de rattrapage 2 et éventuellement aussi la cage de fixation 3 soient réalisées en une matière synthétique présentant des caractéristiques d'élasticité au moins approximativement comparable aux caractéristiques d'élasticité du métal. Dans ce cas, la cage de fixation 3 est réalisée en une matière synthétique plus rigide que celle de la cage de rattrapage 2.

La cage de rattrapage 2 comporte un pan perforé 25 porteur de l'écrou 1 et quatre pattes élastiquement déformables 21 à 24. Chacune des quatre pattes 21 à 24 enferme entre elle et le pan perforé 25 un angle B supérieur à 90°. Les quatre pattes élastiques 21 à 24 sont disposées équidistantes les unes par rapport aux autres. Cela signifie que les quatre pattes sont disposées par paires opposées et que l'une des deux paires est disposée à 90° par rapport à l'autre paire de pattes.

Selon une variante non représentée sur les dessins, les quatre pattes flexibles de la cage de rattrapage 2 forment chacune avec le pan perforé un angle de l'ordre de 90°. Pour obtenir l'effet de rattrapage, chacune des pattes est pourvue d'un corps réalisé en un matériau élastiquement compressible fixé proche des extrémités libres de ces pattes.

De manière générale, la cage de rattrapage 2 est une pièce monolithique ayant la forme générale d'un tronc de pyramide. Lorsque la cage de rattrapage est réalisée en une matière synthétique, elle est obtenue par exemple par un procédé d'injection. Lorsque, par contre, la cage de rattrapage est réalisée en métal, elle est obtenue par poinçonnage et pliage d'une feuille d'un métal souple ou élastiquement déformable, les quatre pattes constituant alors les pans latéraux du tronc de pyramide.

Par ailleurs, chacune des quatre pattes 21, 24 de la cage de rattrapage comporte un rebord 26 obtenu par pliage vers l'intérieur de la cage, de son extrémité libre. Chacun des quatre rebords 26 est distancé du pan perforé 25 suivant l'épaisseur de l'écrou 1 afin de pouvoir immobiliser l'écrou 1 axialement.

Afin de pouvoir immobiliser l'écrou 1 aussi transversalement par rapport à l'axe A, chacune des quatre pattes flexibles 21 à 24 de la cage de rattrapage 2 comporte, dans une partie formant un des pans latéraux du tronc de pyramide, une languette 27 obtenue par poinçonnage. Chacune des languettes 27 est fléchie, par rapport à la patte flexible dans laquelle est formée, vers l'intérieur de la cage de rattrapage 2 de manière que, lorsque l'écrou 1 est situé à l'intérieur de la cage de rattrapage 2, les quatre languettes 27 immobilisent l'écrou 1 transversalement par rapport au pan perforé 25.

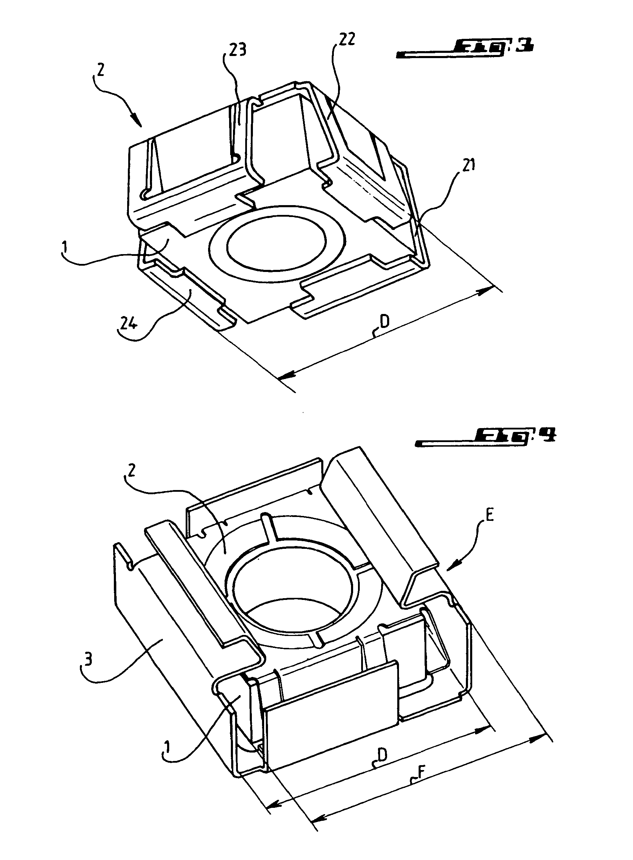

Les quatre pattes flexibles 21 à 24 de la cage de rattrapage 2 sont pliées par rapport au pan perforé 25 de manière que l'écartement des extrémités libres de deux pattes opposées présente un écart D. L'écartement D est déterminé suivant les dimensions intérieures de la cage de fixation 3 comme cela sera expliqué en référence aux figures 3 et 4.

La cage de fixation 3 comprend deux pattes flexibles 31, 32 disposées en opposition et deux pattes d'appui 33, 34 disposées perpendiculairement par rapport aux pattes 31, 32.

Les pattes flexibles 31, 32 s'étendent approximativement perpendiculairement par rapport à un pan perforé 35 donnant accès à l'écrou 1.

Les extrémités libres des pattes flexibles 31, 32 présentent la forme générale d'une gouttière ouverte vers l'extérieur afin que celle-ci saisissent les parties opposées 41, 42 du pourtour de l'ouverture 4, lorsque l'écrou cage D est inséré dans l'ouverture 4 de la paroi P. Ces parties 41, 42 du pourtour de l'ouverture 4 s'engagent alors respectivement dans l'extrémité libre de la partie 31 et dans l'extrémité libre de la partie 32.

Contrairement à cela, les pattes 33, 34, qui s'étendent également approximativement perpendiculairement par rapport au pan perforé 35, ont des extrémités libres sous la forme d'un bord droit et la longueur des pattes 33, 34 est déterminée de manière à ce que, lorsque l'écrou cage E est inséré dans l'ouverture 4 du panneau P, les parties 33, 34 prennent appui sur la paroi P. Dans la représentation de la figure 1, les pattes 33, 34 prendront alors appui sur la face P1 de la paroi P et selon la représentation de la figure 2, les pattes 33, 34 prendront appui sur la face P2 de la paroi P1.

La figure 3 représente l'écrou 1 mis en place dans la cage de rattrapage 2. La figure 3 montre plus particulièrement l'écartement D des extrémités libres des deux pattes opposées.

La figure 4 représente l'ensemble des éléments formant l'écrou cage E avec l'écrou 1 insérée dans la cage de rattrapage 2 et celle-ci insérée dans la cage de fixation 3. On notera sur la figure 4 plus particulièrement que l'écartement D de deux pattes de fixation opposées de la cage de rattrapage 2 correspond à un écartement F des pattes opposées 31, 32 de la cage de fixation 3 mesurée du côté intérieur de la naissance des pattes. Grâce à cette disposition, la cage de rattrapage 2 est elle-même immobilisée à l'intérieur de la cage de fixation 3. La cage de rattrapage 2 produit un effet de rattrapage uniquement par un mouvement de translation du pan perforé 25 ensemble avec l'écrou 1 en exploitant l'élasticité des pattes flexibles 21 à 24 de la cage de rattrapage 2.

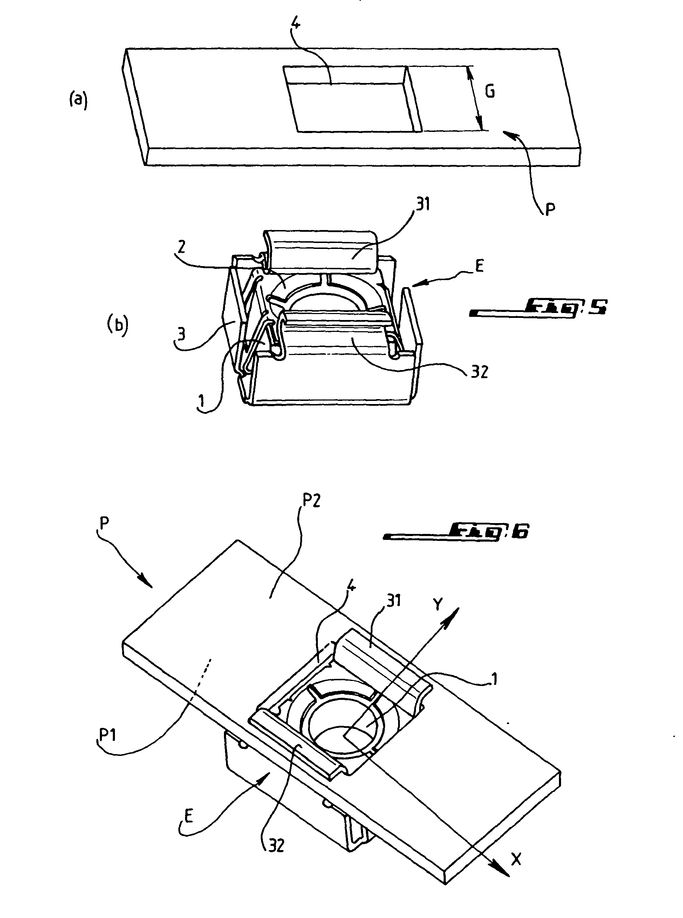

Grâce au fait que les quatre pattes 21 à 24 de la cage de rattrapage 2 sont flexibles et par hypothèse, ont chacune la même flexibilité, l'écrou 1 peut être déplacé à l'intérieur de la cage de fixation 3 dans un mouvement de translation transversal par rapport à l'axe A suivant n'importe quelle orientation. Ce mouvement de translation peut être orienté suivant les coordonnées habituelles X, Y comme indiqué sur la figure 6, ou suivant le sens négatif de ces coordonnées, ou encore suivant toute orientation combinant ces deux orientations de base X, Y.

La figure 5 montre l'écrou cage E de la figure 4, tourné suivant l'orientation de l'ouverture 4 dans la paroi P et à proximité de la paroi B afin d'y être inséré. L'insertion de l'écrou cage E dans l'ouverture 4 de la paroi P se fait par pincement de la cage de fixation 3 entre les doigts d'un monteur. Le monteur pincera alors les pattes de fixation 31, 32 afin de rapprocher leurs extrémités libres l'une à l'autre et de permettre ainsi leur passage à travers l'ouverture 4.

Les figures 5 et 6 rappellent que, comme dans les ouvertures destinées à recevoir des écrous cage traditionnels, la largeur G de l'ouverture 4 est inférieure à l'écartement F des extrémités libres des pattes 31, 32 de la cage de fixation 3.

La figure 6 montre par ailleurs un exemple de montage d'un écrou cage E avec un agencement de cage selon l'invention, sur une paroi P. L'écrou cage E est fixé sur la face P1 des deux faces opposées P1, P2 de la paroi P devant une ouverture 4 pratiquée dans cette paroi P. L'ouverture 4 permet l'accès à l'écrou 1 à partir de la face P2. Pour être fixé dans la paroi P, l'écrou cage E comprend des moyens de fixation 31, 32 conformé pour saisir les bords 41, 42 du pourtour de l'ouverture 4 sur les deux faces opposées P1, P2 de la paroi P.

## Revendications

1. Agencement de cage pour un écrou cage (E), comprenant une cage de fixation (3) conformée pour enfermer un écrou (1) et pour maintenir cet écrou (1) sur l'une (P1) de deux faces opposées (P1, P2) d'une paroi (P) devant une ouverture (4) pratiquée dans cette paroi (P) et permettant un accès à l'écrou (1) à partir de l'autre (P2) des deux faces (P1, P2) de la paroi (P), la cage de fixation (3) comprenant à cet effet des moyens de fixation (31, 32) conformés pour saisir le pourtour (41-44) de l'ouverture (4) sur les deux faces opposées (P1, P2) de la paroi (P),
**caractérisé en ce qu'**il comprend en outre une cage de rattrapage (2) disposée à l'intérieur de la cage de fixation (3), la cage de rattrapage (2) comportant des moyens élastiques (21-24) conformés pour maintenir l'écrou (1) non sollicité dans une position centrée devant l'ouverture (4) de la paroi (P) et pour permettre un déplacement de rattrapage, transversal à un axe de rotation (A) de l'écrou (1), lorsque l'écrou (1) est sollicité par l'engagement d'une vis dans cet écrou (1).

2. Agencement selon la revendication 1, **caractérisé en ce que** la cage de rattrapage (2) est réalisée en un métal souple.

3. Agencement selon la revendication 1, **caractérisé en ce que** la cage de rattrapage (2) est réalisée en un métal élastiquement déformable.

4. Agencement selon l'une quelconque des revendications 1 à 3, **caractérisé en ce que** la cage de fixation (3) est réalisée en un métal plus rigide que celui de la cage de rattrapage (2).

5. Agencement selon l'une quelconque des revendications 1 à 4, **caractérisé en ce que** la cage de rattrapage (2) comporte un pan perforé (25) porteur de l'écrou (1) et quatre pattes (21-24) élastiquement déformables qui enferment chacune entre elle et le pan perforé (25) un angle (B) supérieur à 90° et qui sont disposées équidistantes les unes par rapport aux autres.

6. Agencement selon la revendication 5, **caractérisé en ce que** la cage de rattrapage (2) est une pièce monolithique ayant la forme générale d'un tronc de pyramide obtenu par poinçonnage et pliage d'une feuille d'un métal souple ou élastiquement déformable, les quatre pattes (21-24) constituant des pans latéraux du tronc de pyramide.

7. Agencement selon la revendication 6, **caractérisé en ce que** chacune des quatre pattes (21-24) de la cage de rattrapage (2) comporte un rebord (26) obtenu par pliage vers l'intérieur de son extrémité libre, chacun des quatre rebords (26) étant distancé du pan perforé (25) suivant l'épaisseur de l'écrou (1) afin de pouvoir immobiliser l'écrou (1) axialement.

8. Agencement selon la revendication 6 ou 7, **caractérisé en ce que** chacune des quatre pattes (21-24) de la cage de rattrapage (2) comporte, dans une partie formant un des pans latéraux du tronc de pyramide, une languette (27) obtenue par poinçonnage et destinée à être en appui sur l'écrou (1) lorsque celui-ci est situé à l'intérieur de la cage de rattrapage (2), les quatre languettes (21-24) étant destinées à immobiliser l'écrou (1) ainsi transversalement par rapport au pan perforé (25).

9. Ecrou cage (E) conformé pour être fixé sur l'une (P1) de deux faces opposées (P1, P2) d'une paroi (P) devant une ouverture (4) pratiquée dans cette paroi (P) et permettant un accès à l'écrou (1) à partir de l'autre (P2) des deux faces (P1, P2) de la paroi (P), l'écrou cage (E) comprenant à cet effet des moyens de fixation (31, 32) conformés pour saisir le pourtour (41, 42) de l'ouverture (4) sur les deux faces opposées (P1, P2) de la paroi (P),
**caractérisé en ce qu'**il comprend un agencement de cage selon l'une quelconque des revendications 1 à 8.

## Claims

1. Cage assembly for a cage nut (E), comprising a fixing cage (3) made to enclose a nut (1) and to keep this nut (1) on one (P1) of two opposite faces (P1, P2) of a wall (P) in front of an opening (4) made in this wall (P), allowing access to the nut (1) from the other one (P2) of the two faces (P1, P2) of the wall (P), the fixing cage (3) comprising means of fixing (31, 32) for this purpose, which are made to seize the circumference (41-44) of the opening (4) on the two opposite faces (P1, P2) of the wall (P),
**characterised in that** it also comprises a take-up cage (2) arranged inside the fixing cage (3), the take-up cage (2) having elastic means (21-24) made to keep the nut (1) not under stress in a centred position in front of the opening (4) of the wall (P), to allow a take-up movement crosswise to an axis of rotation (A) of the nut (1), when the nut (1) is under stress by the engagement of a screw in this nut (1).

2. Assembly according to claim 1, **characterised in that** the take-up cage (2) is made in a pliable metal.

3. Assembly according to claim 1, **characterised in that** the take-up cage (2) is made in an elastically deformable metal.

4. Assembly according to any one of claims 1 to 3, **characterised in that** the fixing cage (3) is made in a more rigid metal than that of the take-up cage (2).

5. Assembly according to an one of claims 1 to 4, **characterised in that** the take-up cage (2) has a perforated piece (25) carrying the nut (1) and four elastically deformable legs (21-24), which with the perforated piece (25) each enclose an angle (B), which is greater than 90°, and which are arranged equidistant to each other.

6. Assembly according to claim 5, **characterised in that** the take-up cage (2) is a monolithic piece with the general shape of a truncated cone obtained by punching and folding a sheet of pliable or elastically deformable metal, the four legs (21-24) forming the side pieces of the truncated cone.

7. Assembly according to claim 6, **characterised in that** each of the four legs (21-24) of the take-up cage (2) has an edge (26) obtained by folding its free edge towards the inside, each of the four edges (26) being at a distance from the perforated piece (25) according to the thickness of the nut (1) in order to be able to immobilise the nut (1) axially.

8. Assembly according to claim 6 or 7, **characterised in that** in a part forming one of the side pieces of the truncated cone each of the four legs (21-24) of the take-up cage (2) has a tongue (27) obtained by punching, which is intended to be supported on the nut (1), when it is situated inside the take-up cage (2), the four tongues (21-24) being intended to immobilise the nut (1) crosswise in relation to the perforated part (25) in this way.

9. Cage nut (E) made to be fixed on one (P1) of two opposite faces (P1, P2) of a wall (P) in front of an opening (4) made in this wall (P), allowing access to a nut (1) from the other one (P2) of the two faces (P1, P2) of the wall (P), the cage nut (E) comprising means of fixing (31, 32) for this purpose, which are made to seize the circumference (41, 42) of the opening (4) on the two opposite faces (P1, P2) of the wall (P),
**characterised in that** it comprises a cage assembly according to any one of claims 1 to 8.

## Patentansprüche

1. Käfiganordnung für eine Käfigmutter (E) mit einem Fixierkäfig (3), der dazu vorgesehen ist, eine Mutter (1) zu umschließen und diese Mutter (1) an der einen (P1) von zwei entgegengesetzten Seiten (P1, P2) einer Wand (P) vor einer Öffnung (4) zu halten, die in dieser Wand (P) ausgeführt ist und einen Zugang zur Mutter (1) ausgehend von der anderen (P2) der beiden Seiten (P1, P2) der Wand (P) gestattet, wobei der Fixierkäfig (3) dazu Fixiermittel (31, 32) enthält, die dazu vorgesehen sind, den Umfangsrand (41 - 44) der Öffnung (4) an den beiden entgegengesetzten Seiten (P1, P2) der Wand (P) zu ergreifen,
**dadurch gekennzeichnet, dass** sie ferner einen Nachstellkäfig (2) enthält, der innerhalb des Fixierkäfigs (3) angeordnet ist, wobei der Nachstellkäfig (2) elastische Mittel (21 - 24) aufweist, die dazu vorgesehen sind, die unbeaufschlagte Mutter (1) in einer zentrierten Stellung vor der Öffnung (4) der Wand (P) zu halten und eine Nachstellbewegung quer zur Drehachse (A) der Mutter (1) zu gestatten, wenn die Mutter (1) durch Eingreifen einer Schraube in diese Mutter (1) beaufschlagt wird.

2. Anordnung nach Anspruch 1, **dadurch gekennzeichnet, dass** der Nachstellkäfig (2) aus einem Weichmetall hergestellt ist.

3. Anordnung nach Anspruch 1, **dadurch gekennzeichnet, dass** der Nachstellkäfig (2) aus elastisch verformbarem Metall hergestellt ist.

4. Anordnung nach einem der Ansprüche 1 bis 3, **dadurch gekennzeichnet, dass** der Fixierkäfig (3) aus einem härteren Metall als der Nachstellkäfig (2) hergestellt ist.

5. Anordnung nach einem der Ansprüche 1 bis 4, **dadurch gekennzeichnet, dass** der Nachstellkäfig (2) eine gelochte Seite (25) aufweist, welche die Mutter (1) abstützt, sowie vier elastisch verformbare Laschen (21 - 24), die jeweils zwischen sich und der gelochten Seite (25) einen Winkel (B) von über 90° einschließen und jeweils abstandsgleich zueinander liegen.

6. Anordnung nach Anspruch 5, **dadurch gekennzeichnet, dass** der Nachstellkäfig (2) ein einstückiges Teil ist, das allgemein die Form eines Pyramidenstumpfs hat, der durch Stanzen und Umbiegen eines aus Weichmetall bestehenden bzw. elastisch verformbaren Blechs erhalten wird, wobei die vier Laschen (21 - 24) die Seitenflächen des Pyramidenstumpfs bilden.

7. Anordnung nach Anspruch 6, **dadurch gekennzeichnet, dass** jede der vier Laschen (21 - 24) des Nachstellkäfigs (2) eine Abkantung (26) aufweist, die durch Umbiegen ihres freien Endes nach innen erhalten wird, wobei jede der vier Abkantungen (26) von der gelochten Seite (25) gemäß der Materialdicke der Mutter (1) beabstandet ist, um die Mutter (1) axial festlegen zu können.

8. Anordnung nach Anspruch 6 oder 7, **dadurch gekennzeichnet, dass** jede der vier Laschen (21 - 24) des Nachstellkäfigs (2) in einem eine der Seitenflächen des Pyramidenstumpfs bildenden Abschnitt eine Zunge (27) aufweist, die durch Stanzen erhalten wird und dazu bestimmt ist, sich an der Mutter (12) abzustützen, wenn diese innerhalb des Nachstellkäfigs (2) liegt, wobei die vier Zungen (21 - 24) dazu bestimmt sind, die Mutter (1) somit quer zur gelochten Seite (25) festzulegen.

9. Käfigmutter (E), die dazu vorgesehen ist, an einer (P1) von zwei entgegengesetzten Seiten (P1, P2) einer Wand (P) vor einer Öffnung (4) fixiert zu werden, die in dieser Wand (P) ausgeführt ist und einen Zugang zur Mutter (1) ausgehend von der anderen (P2) der beiden Seiten (P1, P2) der Wand (P) gestattet, wobei die Käfigmutter (E) dazu Fixiermittel (31, 32) enthält, die dazu vorgesehen sind, den Umfangsrand (41, 42) der Öffnung (4) an den beiden entgegengesetzten Seiten (P1, P2) der Wand (P) zu ergreifen,
**dadurch gekennzeichnet, dass** sie eine Käfiganordnung nach einem der Ansprüche 1 bis 8 enthält.
